# EUROPEAN PATENT SPECIFICATION

(11) **EP 3 403 040 B1**
(45) Date of publication and mention of the grant of the patent: **11.03.2020**
(21) Application number: 17709171.7
(22) Date of filing: 12.01.2017
(51) Int. Cl.: F27B 9/02, F27B 9/20, F27D 99/00, F27B 9/30, F27B 9/36

(54) **KILN FOR CERAMICS WITH IMPROVED EFFICIENCY**
OFEN FÜR KERAMIK MIT VERBESSERTEM WIRKUNGSGRAD
FOUR POUR CÉRAMIQUE À RENDEMENT AMÉLIORÉ

(30) Priority: 12.01.2016 IT UB20169915
(43) Date of publication of application: 21.11.2018
(73) Proprietor: Siti - B&T Group S.p.A., 41043 Formigine (Modena) (IT)
(72) Inventor: CANTARELLI, Lanfranco, 41043 Formigine (Modena) (IT)
(74) Representative: Zoli, Filippo
(86) International application number: PCT/IB2017/050150
(87) International publication number: WO 2017/122144

(56) References cited:
- FR-A1- 2 568 359
- GB-A- 2 261 059
- US-A- 3 990 836

## Description

### TECHNICAL FIELD OF THE INVENTION

This invention is for a kiln for ceramics with improved efficiency.

More specifically, this invention is for a kiln for firing ceramic products and similar items, with reduced emissions of combustion products, characterised by the presence of a smaller product advancement channel, and by an efficient heat distribution in the combustion chamber.

### PRIOR ART

Today, it is known the use of kilns the roller type for the production of ceramics and the like.

Traditionally the above mentioned kilns horizontally extend even up to tens or hundreds of metres and include a feeding channel, by means of rollers, of the ceramic products. The channel normally is characterised by a lower surface or base, two side walls or closing walls, and an upper surface or top.

The walls of the kiln are made of, or covered with, refractory and thermally insulating material able to resist the heat and keep it inside the kiln, preventing it from dispersing outside. This refractory material also contributes to providing heat to the ceramic or other items being fired through radiation.

The pre-heating and/or firing heat is provided to the ceramics or similar items by a certain number of burners which are distributed uniformly along the side walls of the kiln.

This solution has not proved entirely satisfactory with respect to the actual need for kilns that ensure high performances, economic efficiency, and a reduction in the emissions of combustion products.

In fact, in traditional ovens, there is a stratification of heat, which particularly accumulates at the top of the feeding channel: the heat is not completely used and the thermal efficiency of the kiln is therefore less than the values that could be obtained without such stratification, thus worsening the fuel consumption needed to maintain satisfactory performances.

Kilns comprising a non-uniform vault channel are also known, wherein the vault is characterised by the presence of recesses for housing the burners, which burners are arranged above and below the feeding plane for the ceramic products.

FR 2568359 teaches an embodiment of a firing kiln as above indicated.

This solution does not allow a reduction in the number of mouths of the burners, thus, despite the reduction in the volume of the feeding channel, and does not lead to a real improvement in the thermal efficiency and a reduction in emissions of the combustion products.

### OBJECT OF THE INVENTION

The technical purpose of this invention is to develop a ceramics kiln to improve the state of the art.

According to this purpose, the aim to develop a ceramics kiln which allows an improvement in heat distribution inside the feeding channel arises.
furthermore, another purpose of the present invention is to ensure a reduction in the emissions of combustion products.

These purposes are met by the kiln for ceramics with improved efficiency according to the attached claim 1.

The feeding channel for ceramic products has an alternation of areas for housing burners and areas that do not have them: such configuration allows a decrease in the number of burners comprised in the kiln for ceramics, thus a reduction in the consumption of fuel and in the combustion products.

The areas without burners have reduced cross-sections compared to the areas provided with burners.

The reduced cross-section of such areas without burners allows the reduction of of the heat stratification phenomena, thus allowing to a more efficient use of the heat provided by the burners themselves.

Moreover, the reduced cross-section areas allow a reduction of the air volumes inside the oven, thus allowing a further decrease in consumption of the fuel needed to heat the area along the kiln channel.

The realization of reduced cross-section implies an increase in the thermal flow concentration next to the ceramic products, also thanks to the increase in the amount of the heat portion released to the ceramics by irradiation.

The areas in the channel which have reduced cross-section may have constant cross-sections along the product feeding direction but different compared to the others or variable cross-sections along that feeding direction: according to this way they promote a turbulent motion of the air heated by the burners, thus ensuring a greater mixing of the air and more efficient firing of the ceramic products.

In fact, providing such constant cross-sections but different from the areas without burners or variable along the feeding direction of the products, prevents a laminar flow at the products being fired to establish, ensuring more uniform heat distribution and better thermal efficiency in the kiln itself.

More advantageous features are described in the dependent claims.

### BRIEF DESCRIPTION OF THE DESIGNS

The features of the invention will be better understood by any skilled person in the art from the description that follows and the attached drawing tables, given as a non-limiting example in which:
- figure 1: is a longitudinal section of the kiln according to the present invention;
- figure 2: is a longitudinal section of another embodiment of the kiln according to the present invention;
- figure 3: is a longitudinal section of yet another embodiment of the kiln according to the present invention;
- figure 4: is a longitudinal section of yet another embodiment of the kiln according to the present invention;
- figure 5: is a longitudinal section of yet another embodiment of the kiln according to the present invention;
- figure 6: is a longitudinal section of yet another embodiment of the kiln according to the present invention.

### EMBODIMENTS OF THE INVENTION

With reference to the attached figures, a kiln for ceramics with improved performance is wholly indicated with reference number 1.

Kiln 1 may have roller-type or similar transporting means for advancing the ceramic products into its inside.

The kiln 1 according to the present invention is realised in such a way to allow the pre-heating and/or firing of ceramic products such as tiles and similar, which products advance along a longitudinal feeding direction D.

Such kiln 1 may also be used for pre-heating and/or firing different shapes and types of products other than those ceramics, without diverging from the protection offered by the claims that follow.

The kiln 1 includes a support structure 2 that extends for tens or hundreds of metres, which support structure 2 has the purpose to support all the elements that make up the kiln 1 for ceramic products.

The support structure 2 may be made in steel or any other material able to resist to high operating temperatures of such kiln 1.

The support structure 2 is divided into modules 2a which are connected one after the other along the feeding direction D of the ceramic products. The number of the modules 2a depends upon requirements and the type of kiln 1.

Each module 2a comprises a lower surface or base 2b, and an upper surface or top 2c.

Moreover, the modules 2a are leant and constrained on/to support elements 3, of known type, which allow the support of the modules 2a and their positioning at a certain height from the ground.

At the base 2b and the top 2c of each module 2a there is an insulating material 4.

Such insulating material 4 is made of refractory materials, ceramics, and similar such as glass fibre or ceramic fibre or silicon fibre, etc.

The distribution of the insulating material 4 along the kiln 1 may be not uniform: a greater insulation may be required in certain areas than in others.

A channel 5 is positioned between the upper and lower portions of the insulating material 4.

Channel 5 has side walls or closing sides that are also made of or coated with an insulating material 4.

Such channel 5 is the place wherein the feeding of ceramic products being fired occurs, which products cross the entire length of the kiln 1, by entering through an inlet 6a and exiting from the above mentioned channel through an output 6b.

The channel 5, therefore, is the volume inside which pre-heating and firing of ceramic products occur: this leads to the production of combustion products, typically carbon dioxide and nitrogen oxides, which must continuously be expelled from the kiln 1.

The ceramic products are located on a feeding plane P, located in the centre of the channel 5, whose ends are at the inlet 6a and the output 6b of channel 5, in order to facilitate the loading and unloading of such ceramic products.

As it is known, the means that allow the feeding of the ceramic products are located at the feeding plane P and can be in the form of ceramic rollers with transverse axes with respect to the feeding direction D.

Such means for feeding the products may create a sort of barrier to the passage of heat coming from the lower part of kiln 1 and directed towards the ceramic products being fired, therefore, it is possible for example, to foresee the use of rollers in materials that can minimize this phenomenon.

Along the channel 5 for feeding the products, several burners 7 are arranged, which burner are of the essentially known type.

These burners 7, can be arranged on both sides of channel 5, transversal with respect to the feeding direction D of the ceramic products.

According to a preferential configuration, the burners 7 can be on both sides of the channel 5, i.e. laterally with respect to the feeding plane P and/or above or below with respect to such plane P.

The burners 7, as known, are associated with air and fuel supply means.

Channel 5 comprises first zones 8, in which at least one burner 7 is housed, and second zones 9, without burners 7.

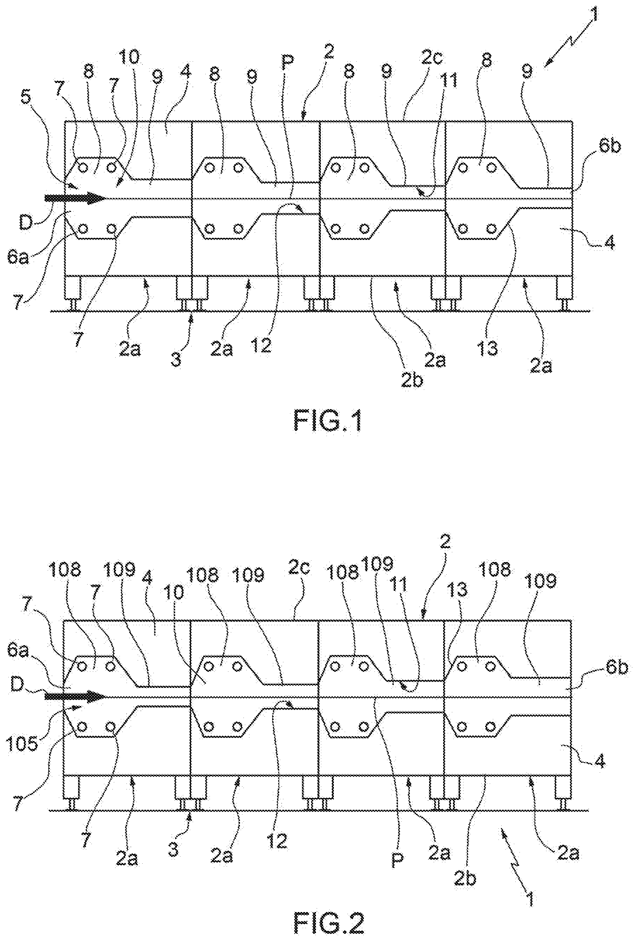

More specifically, each module 2a of support structure 2 may contain, as shown in figures 1-6, a first zone 8 and a second zone 9, one following the other: in this manner, along the channel 5, the first zones 8 are alternated with the second zones 9.

According to other embodiments, each module 2a may contain several a plurality of first zones 8 alternated with a plurality of second zones 9, arranged one following the other.

The first zones 8 and second zones 9 may have the same length, or different lengths, to each others, along the feeding direction D of the ceramic products.

Such zones 8, 9 are delimited superiorly by an upper wall or vault 11 and inferiorly by a lower wall or base 12 that are substantially horizontal.

Moreover, the first zones 8 are connected to the second zones 9 through connection zones 10, which are delimited by opposed inclined surfaces 13 which are diverging and converging, as illustrated in figures 1-6.

The convergence and divergence of the inclined surfaces 13 of the connection zones 10 is obtained by predefined angles, which can be the same for all the connection zones 10 or different. The choice of such angles is related to the purpose of obtaining a better mixing of the fumes in the channel 5.

The first zones 8, the second zones 9, and the connection zones 10 may be symmetrical with respect to the feeding plane P for the ceramic products.

The first zones 8 have a greater cross-section than the second zones 9.

This configuration, with the first zones 8 having a greater cross-section than the second zones 9, requires a greater amount of insulating material at the second zones 9.

The second zones 9 may have constant cross section but different the ones from the others or a variable cross-section along the longitudinal feeding direction D.

This invention thus conceived allows to reach important technical advantages.

Firstly, the presence of the second zones 9 with a reduced cross-section allow the reduction of volumes around the ceramics being fired, thus there is a greater concentration of heat at the products themselves.

Moreover, thanks to the presence of the reduced second zones 9 and to their alternation with the first zones 8, the accumulation of heat in the areas of the channel at the vault is limited, thus preventing heat stratification phenomenon.

The restriction of the second zones 9 also allows an increase in the amount of heat released by radiation from the vault 11 and base 12 to the ceramic products advancing on plane P.

The greater heat concentration near the ceramic products, the lower heat stratification and the greater heat quantity conveyed to the products due to radiation allow a reduction in the number of burners 7 arranged at the first zones 8, needed to pre-heat and fire the ceramic products.

The reduction in the number of burners 7 allow a fuel consumption reduction, thus leading to a greater cheapness, as well as a reduction in the combustion products.

The channel 5, so configured, with reduced cross-section areas, also allows for reduced internal volumes for the channel, and consequently contributes to the decrease in the pollutant combustion products to be expelled.

A lower amount of combustion products to be expelled also means to be a decrease in the energy needed to expel them, for example through fans.

A further advantage is connected to the reduction in fluid dynamic losses related to the flow of combustion products along the channel, with a subsequent greater efficiency of the extraction system for the combustion products.

Six possible embodiments of the ceramics kiln with improved efficiency are also considered, as shown in figures 1-6, which may allow further advantages beyond those here presented.

The first embodiment is illustrated in figure 1. Each among the subsequent embodiments (from figure 2 to 6) presents parts indicated with the same reference number used for the corresponding parts in the embodiment that precedes, but increased by 100 units.

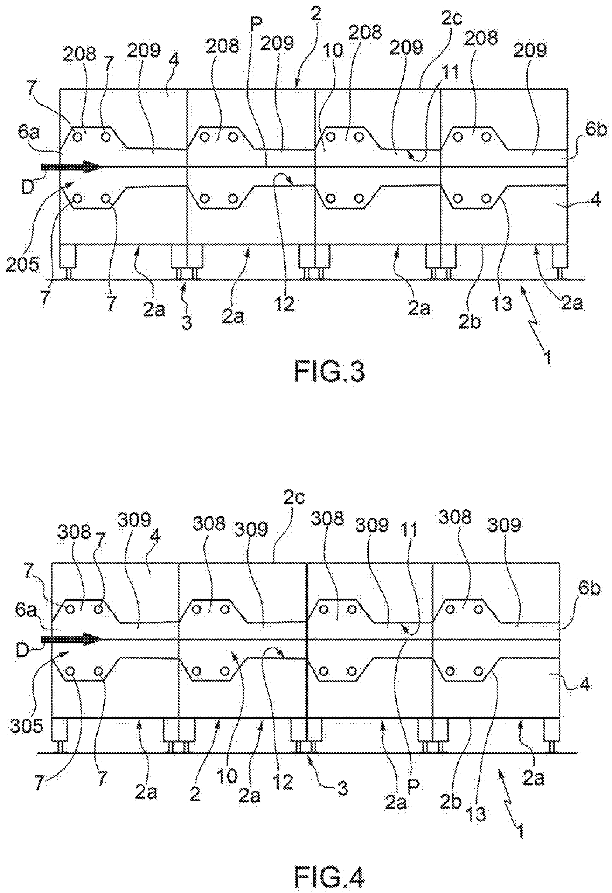

For example, in the second embodiment, shown in figure 2, has second zones 109 and first zones 108; the third embodiment, shown in figure 3, has second zones 209 and first zones 208, and so forth for the other embodiments and the corresponding parts which are different for the various implementations.

According to the preferred embodiment, illustrated in figures 1 and 2, the second zones 9 and 109, have a constant cross-section along the feeding direction D, but they differ from each other.

More specifically, the cross-section of each second zone 9 may be less than the cross-section of the second zone 9 that precedes it along the feeding direction D of the products, as illustrated in figure 1.

As an alternative, as shown in figure 2, the cross-section of each second zone 109 may be greater than the cross-section of the second zone 109 that precedes it along the feeding direction D of the products.

By means of such embodiments, illustrated in figures 1 and 2, a further important advantage is obtained, due precisely to the presence of second zones 9 and 109 with constant cross-sections along D, but which differ one from each other. This differentiation, in fact, promotes the turbulent motion of the air heated by the burners 7, allowing an increase in the remixing of the combustion products, with a subsequent improvement in the thermal exchange conditions and uniform distribution of heat inside the kiln 1.

In fact, by providing cross-sections different to each other, for the secondary zones 9 and 109, the establishment of a laminar flow at the ceramic products being fired is avoided, thus ensuring a uniform heat distribution as well as an improved thermal efficiency for the kiln itself.

These configurations allow the breakage of the vein of the laminar motion at the product, as well as a further reduction in the internal volume of the channel 5, 105, since second zones 9, 109 more and more reduced along the feeding direction D or along the direction opposite to the latter there are.

The configuration of figure 2 also allows the improvement in the draught of fumes towards the channel output, thanks to the creation of second zones 109 with an increasing cross-section along the feeding direction D.

Another embodiment of the kiln for ceramics with improved efficiency according to the present invention is shown in figures 3 and 4: according to such embodiment, the second zones 209, 309 have a variable cross-section along the feeding direction D, in a convergent or divergent manner with respect to the plane P for feeding the ceramic products.

In the embodiment shown in figure 3, the second zones 209 have the same longitudinal section with a convergent arrangement with respect to the product feeding plane P.

In the embodiment shown in figure 4, the second zones 309 have the same longitudinal section with a diverging arrangement with respect to the product feeding plane P.

Such configurations, of figures 3 and 4, also ensure turbulent motion and thus the breakage of the vein of the laminar motion, by means of the convergent or divergent shape of the longitudinal sections of the second zones 209, 309 with the consequent benefits already disclosed with regards to the embodiments of figures 1 and 2.

Moreover, the configurations of figures 3 and 4 allow an easier assembly and maintenance, due to the fact that such second zones 209, 309, according to longitudinal section, appear the same.

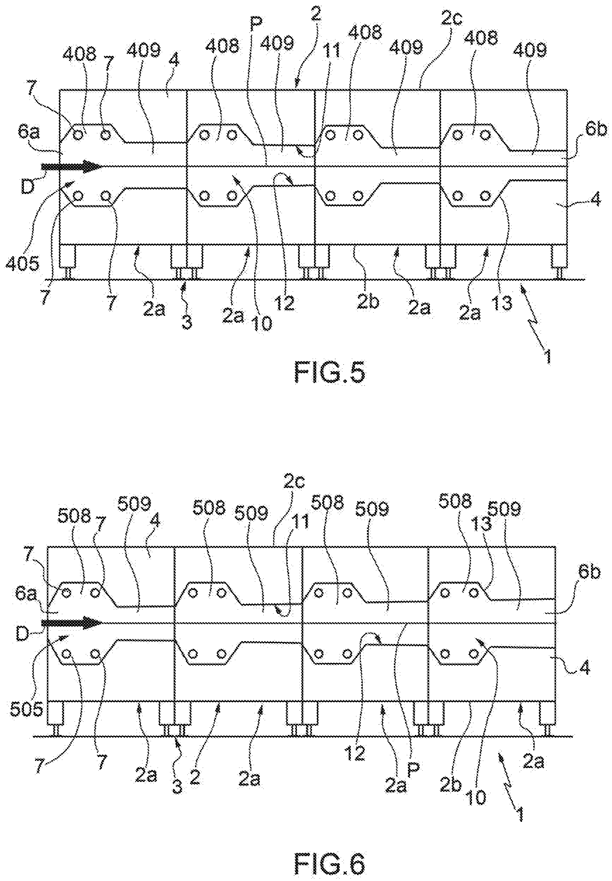

In the embodiments illustrated in figures 5 and 6, the second zones 409, 509, if considered in succession to one another, define a longitudinal section with an overall convergent or divergent arrangement with respect to the product feeding plane P.

The kiln 1 illustrated in figure 5 comprises second zones 409 that, if considered in succession to one another, defined a longitudinal section with an overall convergent arrangement with respect to the products feeding plane P, in figure 6, on the other hand, there is an overall divergent arrangement yet with respect to the products feeding plane P.

The configurations of figures 5 and 6 show themselves the advantages connected to the creation of the turbulent motion and to the breakage of the vein of the laminar motion.

Moreover, the embodiment of figure 6 allows an improved draught of the fumes towards the outlet of the channel.

In one embodiment, not illustrated in the figures, the second zones, if considered in succession to one another, can define a longitudinal section with an overall alternating convergent and divergent arrangement, with respect to the product feeding plane P. Such embodiment allows an increase of the turbulent motion with a consequent further improvement in heat distribution in the kiln for ceramics.

Moreover, the modules 2a in the support structure 2 of kiln 1 can comprise a plurality of first and second zones, for example, two first zones alternated with two second zones: in this manner a more uniform heat distribution in the kiln is obtained e, thus, a further reduction in the stratification phenomena. Even this embodiment is not shown in the attached figures.

It has been shown how the invention achieves the proposed scope.

The present invention was described according to the preferred forms, but equivalent variants can be designed without diverging from the protection offered by the claims that follow.

## Claims

1. A kiln for ceramics with improved efficiency (1), comprising a channel (5; 105; 205; 305; 405; 505) for feeding ceramic products, said channel (5; 105; 205; 305; 405; 505) has a longitudinal feeding direction (D) and a feeding plane (P) for the products, wherein said channel (5; 105; 205; 305; 405; 505) comprises first zones (8, 108, 208, 308, 408, 508) wherein at least one burner (7) is housed and second zones (9, 109, 209, 309, 409, 509) without burners (7), **characterized in that** said first zones (8, 108, 208, 308, 408, 508) have a cross section greater than that of said second zones (9, 109, 209, 309, 409, 509), wherein said first zones (8, 108, 208, 308, 408, 508) are connected to said second zones (9, 109, 209, 309, 409, 509) via connection zones (10), which are delimited by opposite convergent or divergent inclined surfaces (13). and **in that** said second zones (9, 109, 209, 309, 409, 509) have a cross section whose size is constant along the longitudinal feeding direction (D) but different with respect to one another, or a cross section whose size is variable along the longitudinal feeding direction (D).

2. A kiln for ceramics with improved efficiency (1) according to claim 1, wherein each of said second zones (9, 109, 209, 309, 409, 509) has a constant cross section whose size is less than that of the cross section of a subsequent among said second zones (9, 109, 209, 309, 409, 509) along the feeding direction (D).

3. A kiln for ceramics with improved efficiency (1) according to claim 1, wherein each of said second zones (9, 109, 209, 309, 409, 509) has a constant cross section whose size is greater than that of the cross section of a subsequent among said second zones (9, 109, 209, 309, 409, 509) along the feeding direction (D).

4. A kiln for ceramics with improved efficiency (1) according to claim 1, wherein said second zones (9, 109, 209, 309, 409, 509) have a cross section variable in a converging or diverging manner with respect to said feeding plane (P) of the products, along the feeding direction (D).

5. A kiln for ceramics with improved efficiency (1) according to claim 4, wherein said second zones (9, 109, 209, 309, 409, 509) have the same longitudinal section converging or diverging arrangement with respect to said feeding plane (P) of the products.

6. A kiln for ceramics with improved efficiency (1) according to claim 4, wherein said second zones (9, 109, 209, 309, 409, 509) determine, when considered in succession to one another, a longitudinal section with an overall converging or diverging arrangement with respect to said feeding plane (P) of the products.

7. A kiln for ceramics with improved efficiency (1) according to claim 4, wherein said second zones (9, 109, 209, 309, 409, 509) determine, when considered in succession to one another, a longitudinal section with an alternatively overall converging or diverging arrangement with respect to said feeding plane (P) of the products.

8. A kiln for ceramics with improved efficiency (1) according to any one of the preceding claims, wherein said channel (5, 105, 205, 305, 405, 505) has side walls on which said at least one burner (7) is arranged, transversally with respect to the feeding plane (P) of the products.

9. A kiln for ceramics with improved efficiency (1) according to any one of the preceding claims, wherein said first zones (8, 108, 208, 308, 408, 508) are alternated with said second zones (9, 109, 209, 309, 409, 509).

10. A kiln for ceramics with improved efficiency (1) according to the previous claim, wherein said first zones (8, 108, 208, 308, 408, 508) and/or said second zones (9, 109, 209, 309, 409, 509) and/or said connection zones (10) are symmetrical with respect to said feeding plane (P) of the ceramic products.

11. A kiln according to one of the preceding claims, wherein said first zones (8, 108, 208, 308, 408, 508) and said second zones (9, 109, 209, 309, 409, 509) have the same length, or different lengths from each other, with respect to said feeding direction (D) of the products.

## Patentansprüche

1. Ofen für Keramik mit verbessertem Wirkungsgrad (1), umfassend einen Kanal (5; 105; 205; 305; 405; 505) zum Zuführen von Keramikprodukten, wobei der Kanal (5; 105; 205; 305; 405; 505) eine Längszuführungsrichtung (D) und eine Zuführungsebene (P) für die Produkte aufweist, wobei der Kanal (5; 105; 205; 305; 405; 505) erste Zonen (8, 108, 208, 308, 408, 408, 508), in denen mindestens ein Brenner (7) untergebracht ist, und zweite Zonen (9, 109, 209, 309, 409, 509) ohne Brenner (7) umfasst, **dadurch gekennzeichnet, dass** die ersten Zonen (8, 108, 208, 308, 408, 508) einen Querschnitt aufweisen, der größer ist als der der zweiten Zonen (9, 109, 209, 309, 409, 509), wobei die ersten Zonen (8, 108, 208, 308, 308, 408, 508) mit den zweiten Zonen (9, 109, 209, 309, 409, 509) über Verbindungszonen (10) verbunden sind, die durch gegenüberliegende konvergente oder divergente geneigte Oberflächen (13) begrenzt sind. und dass die zweiten Zonen (9, 109, 209, 309, 309, 409, 509) einen Querschnitt aufweisen, dessen Größe entlang der Längszuführungsrichtung (D) konstant, aber unterschiedlich zueinander ist, oder einen Querschnitt, dessen Größe entlang der Längszuführungsrichtung (D) variabel ist.

2. Ofen für Keramik mit verbessertem Wirkungsgrad (1) nach Anspruch 1, wobei jede der zweiten Zonen (9, 109, 209, 309, 409, 509) einen konstanten Querschnitt aufweist, dessen Größe kleiner ist als die des Querschnitts einer nachfolgenden der zweiten Zonen (9, 109, 209, 309, 409, 509) entlang der Zuführungsrichtung (D).

3. Ofen für Keramik mit verbessertem Wirkungsgrad (1) nach Anspruch 1, wobei jede der zweiten Zonen (9, 109, 209, 309, 409, 509) einen konstanten Querschnitt aufweist, dessen Größe größer ist als die des Querschnitts einer nachfolgenden der zweiten Zonen (9, 109, 209, 309, 409, 509) entlang der Zuführungsrichtung (D).

4. Ofen für Keramik mit verbessertem Wirkungsgrad (1) nach Anspruch 1, wobei die zweiten Zonen (9, 109, 209, 309, 409, 509) eine Querschnittsvariable in konvergierender oder divergierender Weise in Bezug auf die Zuführungsebene (P) der Produkte entlang der Zuführungsrichtung (D) aufweisen.

5. Ofen für Keramik mit verbessertem Wirkungsgrad (1) nach Anspruch 4, wobei die zweiten Zonen (9, 109, 209, 309, 409, 509) die gleiche konvergierende oder divergierende Längsschnittanordnung in Bezug auf die Zuführungsebene (P) der Produkte aufweisen.

6. Ofen für Keramik mit verbessertem Wirkungsgrad (1) nach Anspruch 4, wobei die zweiten Zonen (9, 109, 209, 309, 409, 509), wenn sie nacheinander betrachtet werden, einen Längsschnitt mit einer insgesamt konvergierenden oder divergierenden Anordnung in Bezug auf die Zuführungsebene (P) der Produkte bestimmen.

7. Ofen für Keramik mit verbessertem Wirkungsgrad (1) nach Anspruch 4, wobei die zweiten Zonen (9, 109, 209, 309, 409, 509), wenn sie nacheinander betrachtet werden, einen Längsschnitt mit einer alternativ insgesamt konvergierenden oder divergierenden Anordnung in Bezug auf die Zuführungsebene (P) der Produkte bestimmen.

8. Ofen für Keramik mit verbessertem Wirkungsgrad (1) nach einem der vorhergehenden Ansprüche, wobei der Kanal (5, 105, 205, 305, 405, 505, 505) Seitenwände aufweist, auf denen der mindestens eine Brenner (7) quer zu der Zuführungsebene (P) der Produkte angeordnet ist.

9. Ofen für Keramik mit verbessertem Wirkungsgrad (1) nach einem der vorhergehenden Ansprüche, wobei die ersten Zonen (8, 108, 208, 308, 408, 508) mit den zweiten Zonen (9, 109, 209, 309, 309, 409, 509) alterniert sind.

10. Ofen für Keramik mit verbessertem Wirkungsgrad (1) nach dem vorhergehenden Anspruch, wobei die ersten Zonen (8, 108, 208, 308, 408, 508) und/oder die zweiten Zonen (9, 109, 209, 309, 409, 509) und/oder die Verbindungszonen (10) symmetrisch zu der Zuführungsebene (P) der Keramikprodukte sind.

11. Ofen nach einem der vorhergehenden Ansprüche, wobei die ersten Zonen (8, 108, 208, 308, 408, 508) und die zweiten Zonen (9, 109, 209, 309, 409, 509) die gleiche Länge oder voneinander unterschiedliche Längen aufweisen, bezogen auf die Zuführungsrichtung (D) der Produkte.

## Revendications

1. Four pour céramiques à rendement amélioré (1), comprenant un canal (5 ; 105 ; 205 ; 305 ; 405 ; 505) permettant d'acheminer des produits céramiques, ledit canal (5 ; 105 ; 205 ; 305 ; 405 ; 505) a une direction d'acheminement longitudinale (D) et un plan d'acheminement (P) pour les produits, dans lequel ledit canal (5 ; 105 ; 205 ; 305 ; 405 ; 505) comprend des premières zones (8, 108, 208, 308, 408, 508) dans lesquelles au moins un brûleur (7) est logé et des secondes zones (9, 109, 209, 309, 409, 509) sans brûleurs (7), **caractérisé en ce que** lesdites premières zones (8, 108, 208, 308, 408, 508) ont une section transversale plus grande que celle desdites secondes zones (9, 109, 209, 309, 409, 509), dans lequel lesdites premières zones (8, 108, 208, 308, 408, 508) sont reliées auxdites secondes zones (9, 109, 209, 309, 409, 509) via des zones de liaison (10), qui sont délimitées par des surfaces inclinées convergentes ou divergentes opposées (13),
et **en ce que** lesdites secondes zones (9, 109, 209, 309, 409, 509) ont une section transversale dont la taille est constante le long de la direction d'acheminement longitudinale (D) mais différente d'une autre, ou une section transversale dont la taille est variable le long de la direction d'acheminement longitudinale (D).

2. Four pour céramiques à rendement amélioré (1) selon la revendication 1, dans lequel chacune desdites secondes zones (9, 109, 209, 309, 409, 509) a une section transversale constante dont la taille est inférieure à celle de la section transversale d'une ultérieure parmi lesdites secondes zones (9, 109, 209, 309, 409, 509) le long de la direction d'acheminement (D).

3. Four pour céramiques à rendement amélioré (1) selon la revendication 1, dans lequel chacune desdites secondes zones (9, 109, 209, 309, 409, 509) a une section transversale constante dont la taille est plus grande que celle de la section transversale d'une ultérieure parmi lesdites secondes zones (9, 109, 209, 309, 409, 509) le long de la direction d'acheminement (D).

4. Four pour céramiques à rendement amélioré (1) selon la revendication 1, dans lequel lesdites secondes zones (9, 109, 209, 309, 409, 509) ont une section transversale variable d'une manière convergente ou divergente par rapport audit plan d'acheminement (P) des produits, le long de la direction d'acheminement (D).

5. Four pour céramiques à rendement amélioré (1) selon la revendication 4, dans lequel lesdites secondes zones (9, 109, 209, 309, 409, 509) ont le même agencement convergent ou divergent de section longitudinale par rapport audit plan d'acheminement (P) des produits.

6. Four pour céramiques à rendement amélioré (1) selon la revendication 4, dans lequel lesdites secondes zones (9, 109, 209, 309, 409, 509) déterminent, lorsqu'elles sont considérées successivement les unes par rapport aux autres, une section longitudinale avec un agencement globalement convergent ou divergent par rapport audit plan d'acheminement (P) des produits.

7. Four pour céramiques à rendement amélioré (1) selon la revendication 4, dans lequel lesdites secondes zones (9, 109, 209, 309, 409, 509) déterminent, lorsqu'elles sont considérées successivement les unes par rapport aux autres, une section longitudinale avec un agencement alternativement globalement convergent ou divergent par rapport audit plan d'acheminement (P) des produits.

8. Four pour céramiques à rendement amélioré (1) selon l'une quelconque des revendications précédentes, dans lequel ledit canal (5, 105, 205, 305, 405, 505) a des parois latérales sur lesquelles ledit au moins un brûleur (7) est agencé, transversalement par rapport au plan d'acheminement (P) des produits.

9. Four pour céramiques à rendement amélioré (1) selon l'une quelconque des revendications précédentes, dans lequel lesdites premières zones (8, 108, 208, 308, 408, 508) alternent avec lesdites secondes zones (9, 109, 209, 309, 409, 509).

10. Four pour céramiques à rendement amélioré (1) selon la revendication précédente, dans lequel lesdites premières zones (8, 108, 208, 308, 408, 508) et/ou lesdites secondes zones (9, 109, 209, 309, 409, 509) et/ou lesdites zones de liaison (10) sont symétriques par rapport audit plan d'acheminement (P) des produits céramiques.

11. Four selon l'une des revendications précédentes, dans lequel lesdites premières zones (8, 108, 208, 308, 408, 508) et lesdites secondes zones (9, 109, 209, 309, 409, 509) ont la même longueur, ou des longueurs différentes les unes des autres, par rapport à ladite direction d'acheminement (D) des produits.
